**Europäisches Patentamt**

(19) **European Patent Office**

**Office européen des brevets**

(11) Publication number: **0 117 868**
**B1**

(12) # EUROPEAN PATENT SPECIFICATION

(45) Date of publication of patent specification: **04.10.89**

(21) Application number: **83901394.3**

(22) Date of filing: **04.05.83**

(86) International application number:
**PCT/JP83/00136**

(87) International publication number:
**WO 83/04150 24.11.83 Gazette 83/27**

(51) Int. Cl.⁴: **H 04 B 17/00, H 04 B 9/00**

(54) **METHOD AND DEVICE FOR SEPARATING POSITION OF FAULT IN LIGHT TRANSMISSION LINE.**

(30) Priority: **06.05.82 JP 75619/82**
**22.04.83 JP 71089/83**

(43) Date of publication of application:
**12.09.84 Bulletin 84/37**

(45) Publication of the grant of the patent:
**04.10.89 Bulletin 89/40**

(84) Designated Contracting States:
**DE FR GB**

(56) References cited:
**GB-A-1 540 907**
**JP-A-51 083 704**
**JP-A-54 041 001**
**JP-A-55 140 341**
**JP-A-56 100 538**
**JP-A-57 065 930**
**JP-A-57 142 044**

**PATENT ABSTRACTS OF JAPAN, vol. 4, no. 145**
**(E-29)627r, 14th October 1980; & JP-A-55 97753**
**S. 57, Denshi Tsushin Gakkai Zenkoku Taikai**
**Ronbunshu, 5. August 1982, Denshi Tsushin**
**Gakkai (Tokyo), Ronbun No. 989**

(73) Proprietor: **Nippon Telegraph and Telephone**
**Corporation**
**1-6 Uchisaiwaicho 1-chome Chiyoda-ku**
**Tokyo 100 (JP)**

(72) Inventor: **OKADA, Kenji**
**2-1-3-2-504 Hayashi Yokosukashi**
**Kanagawa 238-03 (JP)**
Inventor: **MINOWA, Junichiro**
**3-40-15 Oyabe Yoko-sukashi**
**Kanagawa 238 (JP)**
Inventor: **SATO, Kenichi**
**2-1-3-2-105 Hayashi Yokosukashi**
**Kanagawa 238-03 (JP)**

(74) Representative: **Pike, Harold John et al**
**Abel & Imray Northumberland House**
**303-306 High Holborn**
**London, WC1V 7LH (GB)**

## Description

### Field of the invention

The present invention relates to a method of accurately locating a fault on an optical transmission line used for an optical fiber communication method, and to a device therefor. It relates, more particularly, to a method which is suitable for locating a fault point on an optical transmission line of the subscriber system by testing from the central point of the system (station point), and to a device therefor.

### Background of the invention

A switched communication network comprising a subscriber transmission system, a switchboard, a repeated transmission line, and associated systems, must distinguish a fault point in order to locate such a point immediately when a fault occurs during operation. If the fault is in the subscriber transmission system, a loop-back test is conducted from the central point of the system to determine whether the fault lies in the line or in the subscriber's equipment. When the subscriber line is a metal balanced pair line, it is possible to detect whether or not the line is normal by direct current resistance measurement of the pair of lines.

When optical fiber is used for the subscriber transmission line, such a loop-back test must be carried out on both the optical transmission line and the subscriber equipment respectively in order to distinguish the location of the fault. If the test is conducted from the center, this will be a far end loop-back test. On the other hand, in a transmission system using a semi-conductor laser, it is necessary to minimize the reflection from the optical transmission line to the equipment in order to maintain operational performances. Therefore, in such a system it is not desirable that the light for probing the fault location and the light for transmitting signals are reflected to the semiconductor laser.

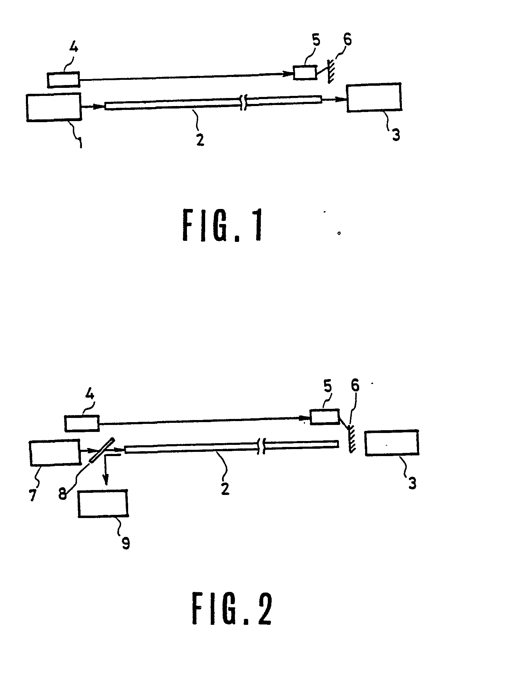

There has been proposed in the prior art a method of inserting at a far end of the transmission line under test, only when the fault is being located, a mirror of high reflectance. The mirror is activated by means of an electrical signal sent from a near end, causing the light which has been sent from the near end to reflect on the mirror. The reflected light therefrom may then be detected at the near end. An example of such a method is shown in Figures 1 and 2; Figure 1 indicates the normal state of optical communication wherein the reference numeral 1 denotes an optical transmitting circuit, 2 an optical transmission line, 3 an optical receiving circuit, 4 a control signal sender, 5 a control signal receiver, and 6 a mirror which is controlled by the control signal receiver 5. During the normal status, optical signals are transmitted from the optical transmitting circuit 1 to the optical receiving circuit 3 through the optical transmission line 2.

Figure 2 shows the status of the line when switched for fault location in order to measure the reflectance and the distance to a reflected point. In the drawing, the reference numeral 7 denotes an optical pulse sender, 8 an optical directional coupler, and 9 an optical pulse receiver. To carry out a fault locating test, a loop-back command is sent from the control signal sender 4 on the transmission side and it is received by the control signal receiver 5. Then the mirror 6 is connected to the optical transmission line 2, and instead of the optical transmitting circuit 1, the optical transmission line 2 is connected to the optical pulse sender 7, the optical directional coupler 8 and the optical pulse receiver 9. The optical pulse from the optical pulse sender 7 enters the optical transmission line 2 through the optical directional coupler 8. The incident optical pulse travels on the optical transmission line 2, is reflected on the mirror 6 on the receiving side, travels back on the optical transmission line 2, and is received by the optical pulse receiver 9 through the optical directional coupler 8.

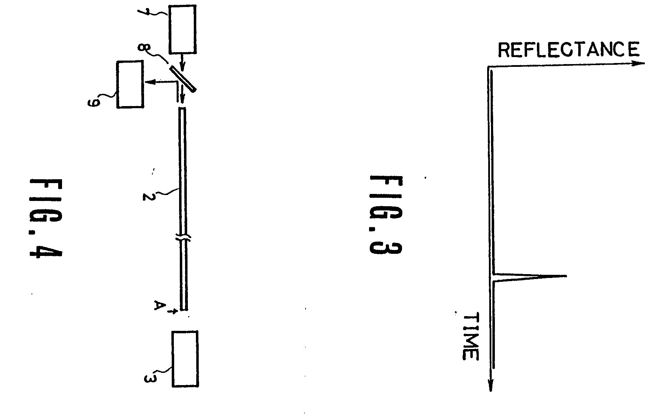

Figure 3 shows the relation between the time lapsed from the time the light is emitted till the time it is received by the optical pulse receiver 9, and the reflectance of the reflected light. Reflected light from a mirror having almost 100% reflectance can be observed at a location which corresponds to the round trip time on the optical transmission line 2.

In case the optical transmission line 2 is broken intermediately, reflection occurs at such a broken point. The reflection which occurs on the broken end face, however, is a Fresnel reflection caused by the difference in the refractive index between glass and air. The reflectance thereof remains at no more than about 4% even under optimal conditions wherein the fault end face is flat and perpendicular to the propagation axis of the optical transmission line. The reflectances which occur under usual, less than optimal conditions are necessarily below the value mentioned above. It therefore is possible to distinguish whether or not the reflection supposed to be caused by the mirror 6 is actually caused on a fault end face on the transmission line, by merely measuring the reflected amount. If it is proved to be caused by the mirror 6, the transmission line 2 can be judged normal.

This method, however, requires the operation of inserting/extracting a mirror at the far end of the transmission line under test. A control signal line is necessary in order to control the mirror. The method is also defective in that it requires a mechanically movable member on the far end and the reliability of the device is liable to deterioration.

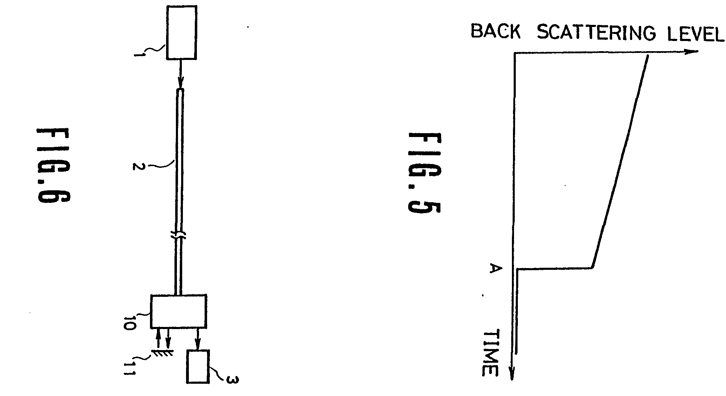

Another method which has been known in the prior art is fault location using backscattering of light. One example of such a method is indicated in Figure 4, wherein reference numeral 7 denotes an optical pulse sender which transmits an optical pulse of a high output, numeral 8 an optical directional coupler, and numeral 9 an optical pulse receiver of high sensitivity. When a high output optical pulse is sent from the optical pulse sender 7 through the optical directional coupler 8, Rayleigh scattering takes place uniformly inside the optical fiber. One component of such Rayleigh scattering light which returns to the position of the sender is called backscattering light, which reversely passes through the optical transmission line 2 and is received by the optical receiver 9 through the optical directional coupler 8. Figure 5 shows the relation between the time needed from the time when the optical pulse is sent until the time the backscattering light is received and the amount of the received backscattering light. Figure 5 indicates that no such backscattering light comes from locations further than the point A, thereby proving that the optical fiber is normal. In order to obtain the distance to the point A, the time necessary for a round-trip may be obtained from the velocity of the light traveling through the optical fiber. The velocity V of the light in the optical fiber can be expressed by the formula below:

$$V = \frac{C}{\varepsilon} \qquad (1)$$

wherein
C: the speed of light in vacuum
$\varepsilon$: the group refractive index of the optical fiber.

Although the constant C has been measured to a fully precise extent, the constant $\varepsilon$ varies depending on individual optical fibers, and therefore it is extremely difficult to precisely conduct respective measurements mentioned above. The fact that the accuracy in measurement is around 0.1% at most shows the difficulty. In other words, about 0.2% of errors occurs when one tries to obtain the distance to the point A from the round-trip time as the above accuracy rate should be doubled. Further, there exists an unavoidable ambiguity for the time equivalent to the half-amplitude level of the optical pulse used for measuring the backscattering light. For instance, if the pulse width is assumed to be 100 nSec, the distance corresponding to the half amplitude becomes about 10 m. In the optical transmission line of 3,000 m, therefore, the possible error is expressed in the formula,

$$3,000 \times 0.002 + 10 = 16 \text{ m}.$$

Fault location up to the point A has, therefore, an inevitable ambiguity of 16 m. Such an ambiguity essentially occurs whenever this backscattering light measurement method is employed.

In case a break down is caused a few meters before the end face connected to the optical receiver 3, for instance, on an indoor wiring, it is not possible to distinguish by measuring such a break from the proper optical transmission line termination and, therefore, the optical transmission line can not be precisely judged normal or not. The fault location by means of backscattering light is thus impractical as well as incomplete.

Patent Abstracts of Japan—vol. 4—No. 145 (E-29) [627]—14th October, 1980 (abstract of JP—A—55 97753) provides information relating to an optical fibre transmission control system in which light reflected through an optical fibre is used to monitor the performances of the optical fibre.

Objects of the invention

An object of the present invention is to obviate the above mentioned defects and to provide a fault location method with a highly discriminating performance, and a device therefor.

Another object of the present invention is to provide a method of fault location suitable for the subscriber's optical transmission line and a device therefor which is a simple in construction and high in reliability.

Disclosure of the invention

According to the present invention, a filter is stationarily inserted at a far end (for instance, at subscriber end) of an optical transmission line. The filter is adapted to separate light of a wavelength which is used for signal transmission on the optical transmission line under test from light of another wavelength which is used for monitoring, to guide the light of the wavelength for signal transmission to the primary optical path and cause the light of the wavelength for monitoring to reflect on the tested optical transmission line. The present invention is characterized in that the light of the monitoring wavelength is sent from a near end (for instance, a test center) of the optical line toward a far end thereof through the optical line and the amount of the reflected light which returns to the optical transmission line is detected.

There are two methods for detecting the amount of such reflected light: the method of obtaining the total sum of respective reflected light, and the method of measuring reflected light on a time-axis. The measurement on a time-axis of reflected light determines the approximate distance to the reflected point. For detecting the amount of reflected light, it is preferable to send light of the wavelength to be used for signal transmission beside light of the wavelength to be used for monitoring on the tested optical transmission line and to compare the amount of reflected light of the above two. The amount of light may be distinguished by sending the light of the wavelength for monitoring and the light of the wavelength for signal transmission time-serially on the tested optical transmission line. Alternatively, the light of the wavelength for monitoring and the light of the wavelength for signal transmission are sent simultaneously on the tested optical transmission line and are distinguished from each other by a filter provided on the near end.

Instead of providing a single far end on the terminal end of one optical transmission line, it is possible to provide a plurality of far ends having different distances at intermediate positions on the line and stationarily insert filters for each of the far ends, thereby distinguishing faults. For the light of the monitoring wavelength, plural light components of different wavelengths may be used so that the plural filters at plural far ends separate from each other such plural light components having different wavelengths.

The second aspect of the invention relates to a device especially adapted to carry out the above mentioned method wherein, on the far end of an optical transmission line under test, are stationarily inserted a filter which separates the light of the wavelength for signal transmission and the light of the wavelength for monitoring from the light which arrives from the tested line, means for guiding the light of signal transmission wavelength thus separated by the filter into a primary optical path and means for causing the thus separated light of monitoring wavelength to reflect at a high reflectance and reversely transmitting it to the line, while on a near end of the line are provided a means for sending the light of monitoring wavelength into the line under test and means for detecting the amount of the light of the monitoring wavelength which returns to the line as the reflected light.

The filter is preferably non-reflective to the light of the signal transmission wavelength.

Brief description of the drawings

Figure 1 is a schematic view of a prior art method.

Figure 2 is a schematic view of a prior art method.

Figure 3 is a graph to explain the data obtained by the prior art method.

Figure 4 is a schematic view of another prior art method.

Figure 5 is a graph to explain the data measured by the prior art method of Figure 4.

Figure 6 is a schematic view of the method according to the present invention.

Figure 7 is a further schematic view of the method according to the present invention.

Figure 8 is a further schematic view of the method according to the present invention.

Figure 9 is a schematic view of a filter and a mirror.

Figure 10 is a graph to show characteristics of a filter.

Figure 11 is a schematic view of a filter and a mirror.

Figure 12 is a schematic view partly in section, of the essential components of a far end structure in accordance with the present invention.

Figure 13 is a graph showing the characteristics of the filter 16.

Figure 14 is a graph showing the characteristics of the filter 17.

Figure 15 is a graph showing the characteristics of the filter 18.

Figure 16 is a graph showing the characteristics of the filter 19.

Figure 17 is a graph showing the characteristics of the filter 20.

Figure 18 is a graph showing the characteristics of the filter 21.

Figure 19 is a schematic view, partly in section, of the essential components of a far end structure in accordance with another embodiment of the present invention.

Figure 20 is a graph showing the characteristics of the filter 30.

Figure 21 is a graph of the data obtained by the method according to the present invention.

Figure 22 is a schematic view of another embodiment of this invention.

Figure 23 is a graph of the data obtained by the method according to the present invention.

Figure 24 is a graph showing the characteristics of the filter 31.

Figure 25 is a schematic view of another embodiment of this invention.

In the drawings, the reference numerals denote the following: 1 an optical transmitting circuit (for signal transmission), 2 an optical transmission line under test, 3 an optical receiver (the primary optical path), 7 an optical pulse sender (for monitoring), 8 an optical directional coupler, 9 an optical pulse receiver (for monitoring), 10 a filter, 11 a mirror and 12 a filter.

Preferred embodiments of the invention

Figures 6 and 7 are schematic views to show the basic structure of the method according to the present invention. In Figure 6, a filter 10 is provided on a far end (subscriber's end) of an optical transmission line 2 in order to separate light of the wavelength for signal transmission from light of the wavelength for monitoring. The filter 10 is inserted stationarily not only for the monitoring state but also for normal communication. This filter 10 guides thus separated light of the monitoring wavelength alone to a mirror 11 where it reflects at a high reflectance. At the normal signal transmission time, when an optical signal is sent from an optical transmitting circuit 1 for signal transmission on a near end, it passes through the optical transmission line 2 to reach the filter 10. The light of the wavelength for signal transmission is filtered by the filter 10 and guided to the optical receiving circuit 3 which is the fundamental optical line.

Figure 7 shows the structure at the time of fault location. At the time of fault location checking, a near end of the line is connected to an optical pulse sender 7 which outputs the light of the wavelength for monitoring instead of normal light from the optical transmitting circuit 1. The optical pulse sent from the optical pulse sender 7 enters the optical transmission line under test 2 through an optical directional coupler 8 and reaches the filter 10 located on the far end. The light of the wavelength for monitoring is filtered by the filter 10 to be reflected by the mirror 11 and then again sent back into the optical transmission line 2, and finally received by the optical pulse receiver 9 through the optical directional coupler 8. Figure 3 shows the result of measurement of the time needed from the time when the optical pulse of the monitoring wavelength is received until the time the reflected light thereof is received and the amount of reflection. If the reflectance of the mirror 11 at the filter 10 is set at an extremely high value, for instance at almost 100%, an amount of reflection corresponding to such a high reflectance can be observed at a position corresponding to the round trip time of the optical transmission line 2. In case the optical transmission line 2 is broken intermediately, the reflection caused on such broken end surfaces results from Fresnel reflection caused by the difference in refractive index between glass and air. Even if the broken end surfaces have optimal conditions such as flatness of the surfaces and disposition perpendicular to the transmission axis of the optical transmission line, the reflected amount will be only about 4%. The reflected amount usually is smaller than the above. Accordingly, by measuring the reflected amount it is possible to distinguish whether the reflection is caused by the light which passes through the filter 10 and reflected on the mirror 11 or by the broken surfaces somewhere intermediate on the line. If it is reflection by the mirror 11, it can be judged that the optical transmission line 2 is normal up to the far end. If it is caused by the broken surfaces, it is possible to know approximate distance to the broken surface judging from the transmission time of the light.

This method can achieve an excellent effect for fault location in indoor wiring of a subscriber. According to the prior art method which does not use a filter and a mirror, in case a fault occurs on the transmission line of the indoor wiring of a subscriber, distance is the one and only criterion to judge whether the light reflected from the fault point is from the actual fault point or from the far end of the transmission line. Even using distance as a criterion, since it is impossible to precisely distinguish the above two points if they are separated only by a 10 to 20 m interval as mentioned above, the prior method hardly distinguishes reflection from the fault point from reflection from the termination of the transmission line. However, the present invention method enables one to easily distinguish reflection from the terminal from reflection from the fault point, because a mirror or a high reflection is located at the terminal of the line which increases the reflection therefrom sufficiently to be distinguishable from reflection caused by a fault.

The method according to this invention does not require a control signal line nor a mechanical mobile member at the far end. It therefore enables fault location with higher reliability.

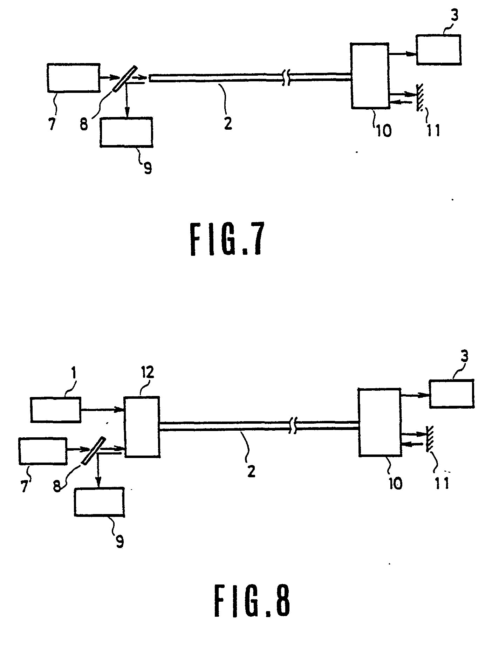

Figure 8 is a schematic structural view of another embodiment of this invention. In the construction shown in Figure 8, another filter 12 is provided on a near end of the optical transmission line 2 to separate/couple the light of wavelength for signal transmission from/with the light of wavelength of monitoring. An optical signal from the optical transmitting circuit 1 is coupled to the optical transmission line 2 by the filter 12 to be transmitted thereon. It is separated by the filter 10 on the far end and received on the optical receiving circuit 3. The optical pulse sender 7 on the near end, on the other hand, outputs light of a wavelength for monitoring and the optical pulse sent is coupled to the optical transmission line 2 by the filter 12 through the optical directional coupler 8. The light of the monitoring wavelength travels on the optical transmission line 2, is filtered by the filter 10 on the far end, reflected by the mirror 11, and again travels reversely on the optical transmission line 2. This is separated at the near end by the filter 12 as the monitoring wavelength and received by the optical pulse receiver 9 through the optical directional coupler 8. According to this embodiment, fault monitoring as well as locating can be conveniently performed simultaneously even at the time of signal transmission.

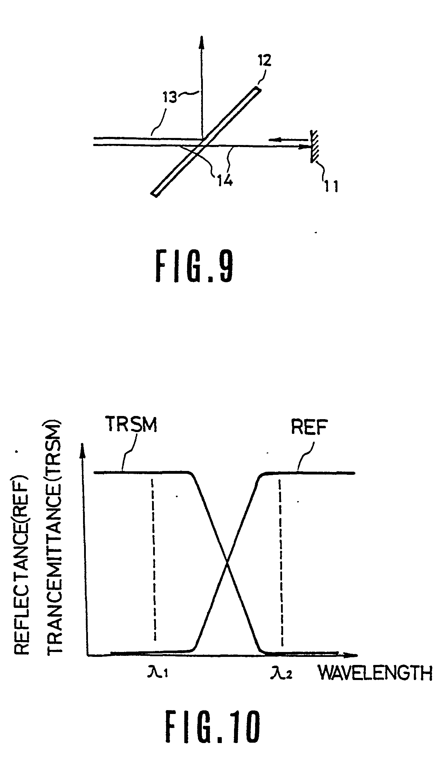

An embodiment of the structure of the filter 10 and the mirror 11 is shown in Figure 9 wherein the reference numeral 12 denotes a multi-layer interference filter which reflects the light 13 of the signal transmission wavelength but transmits the light 14 of the monitoring wavelength. The light 13 of the signal transmission wavelength is reflected by the multi-layer interference filter 12 while the light 14 of the monitoring wavelength is transmitted through the multi-layer interference filter 12, reflected by the mirror 11, transmitted again by the multi-layer interference filter 12 and returned to the optical line from which it had entered.

The graph of Figure 10 shows exemplary characteristics of the multu-layer interference filter 12 wherein the abscissa axis represents wavelength and ordinate axis reflectance or transmittance of the light. In order to perform the operation shown in Figure 9, the wavelength $\lambda_1$ is selected to be the one for monitoring, and the wavelength $\lambda_2$ to be the one for monitoring. If it is assumed that the transmittance of the wavelength $\lambda_2$ for signal transmission is $\mu_2$ and the reflectance of the wavelength $\lambda_2$ at the mirror 11 is $\gamma_2$, the ratio $R_2$ of the light of the wavelength $\lambda_2$ which is transmitted through the wavelength separation filter 12, reflected on the mirror 11 and returned to the original optical transmission line 2 can be expressed by the following formula

$$R_2 = \mu_2 \times \gamma_2 \times \mu_2 = \mu_2^2 \times \gamma_2 \qquad (2)$$

In other words, if the transmittance $\mu_2$ is set at a small value, the ratio of returning light $R_2$ can be expressed by $\mu_2^2$. Therefore, even if the reflectance $\gamma_2$ is 1, the ratio $R_2$ of the light of the wavelength $\lambda_2$ which returns to the optical transmission line 2 will become extremely small. Further if the mirror 11 is made to be of wavelength

selectivity, and reflectance $\gamma_1$ in respect of the monitoring wavelength $\lambda_1$ is set at a large value, while the reflectance $\gamma_2$ in respect of the signal transmission wavelength $\lambda_2$ is set at a small value, the ratio $R_2$ of the light of the wavelength $\lambda_2$ can be made smaller without reducing the ratio $R_1$ of the light of monitoring wavelength $\lambda_1$ which returns to the line.

If non-reflective coating is given so that the light 13 of the wavelength $\lambda_2$ for signal transmission may not be reflected but attenuated after it is reflected by the wavelength filter 12, the ratio of the light of the wavelength $\lambda_2$ which returns to the optical line 2 can be solely determined by the amount expressed by the formula (2) referring to Figure 9.

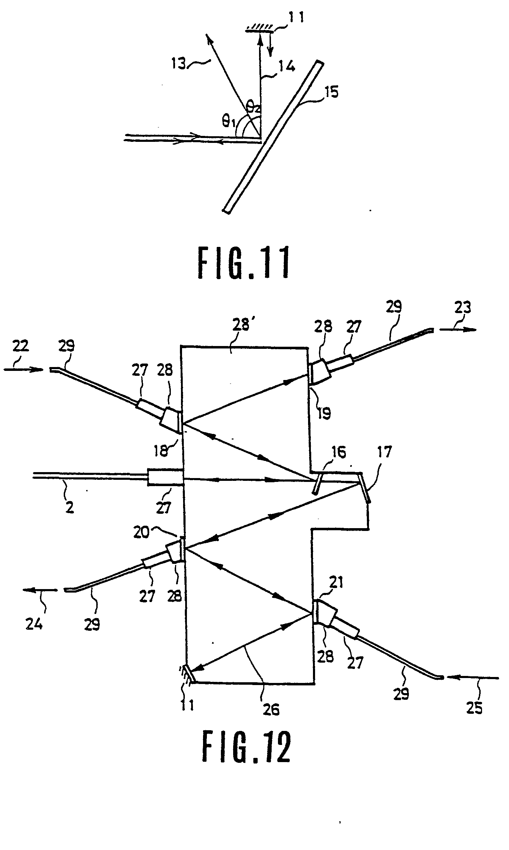

Figure 11 shows another embodiment of the filter 10 and the mirror 11. In Figure 11 the reference numeral 15 denotes a diffraction grating having a reflection angle which varies depending on wavelength. When the light 13 of the wavelength for signal transmission enters the diffraction grating 15, it is diffracted by the angle $\theta_1$ shown in Figure 11. If the light 14 of the wavelength for monitoring enters the diffraction grating 15, it is diffracted by another angle $\theta_2$, reflected by the mirror 11, diffracted again by the diffraction grating 15 and returned to the incident optical line.

In Figures 6 and 8, the optical transmitting circuit 1 and the optical receiving circuit 3 are interchangeable for carrying out the present invention. In this case, the direction of the light 13 of the wavelength for signal transmission is opposite in the structure of the filter shown in Figures 9 and 11. Even in this structure, the light 13 of signal transmission would not return to the optical transmitting circuit 1 where a light source is located away from the diffraction grating 15 or the wavelength separation filter 12.

Although the foregoing describes an example of one means of transmission, using two or more wavelengths for signal transmission selected from the range of 0.8 μm to 1.5 μm, the method of this invention may be applicable to one-way wavelength division multiplexing transmission or bidirectional wavelength division multiplexing transmission.

Figure 12 shows an embodiment of this invention which is applied for 4-wavelength bidirectional wavelength division multiplexing transmission. As the wavelength for signal transmission are selected 4 types: i.e., 0.81 μm, 0.89 μm, 1.2 μm and 1.3 μm, while as the wavelength for monitoring is selected 0.76 μm.

Optical fibers of quartz type which are easily available have a low light loss for the wavelength of 0.8 μm to 1.6 μm, but have a high light loss for wavelengths of higher or lower than the above range of values. Therefore, the wavelength for signal transmission is chosen from the range of 0.8 μm to 1.6 μm. In a monitoring check test, however, the wavelength having a large light loss may be used because the signal-to-noise ratio can be improved by narrowing the bandwidth or conducting an averaging process there. As the wavelengths of 0.81 μm, 0.89 μm, 1.2 μm and 1.3 μm are selected as the wavelengths for signal transmission, the wavelength of 0.76 μm which has a larger light loss than the above is selected for monitoring.

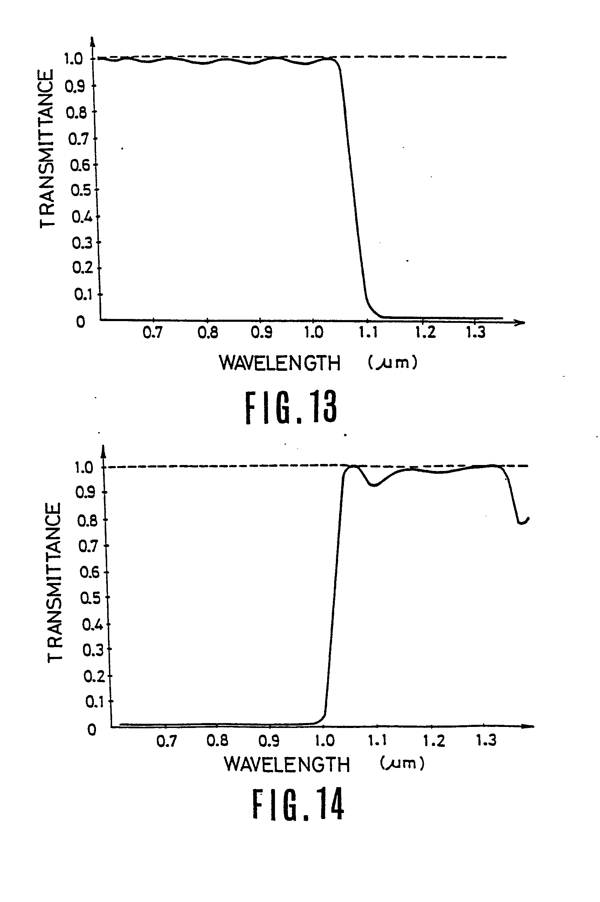

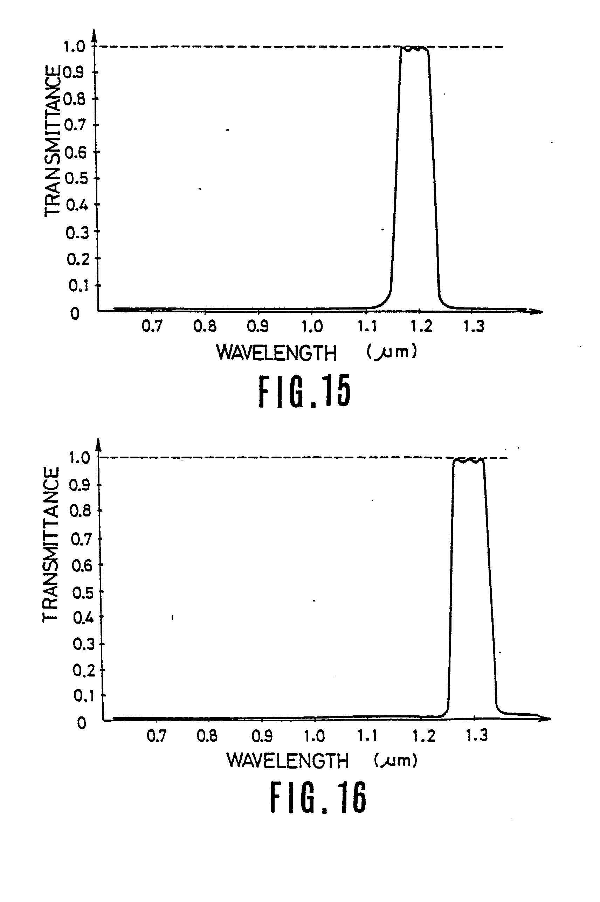

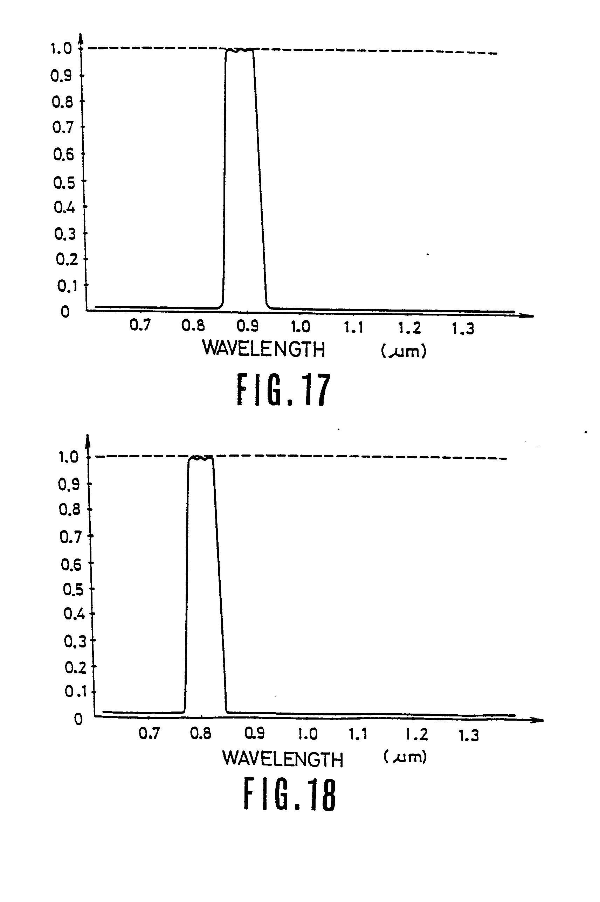

In Figure 12, the reference numeral 16 denotes an interference filter which reflects the wavelength of 1 μm, or more and transmits that of less than 1 μm. Figure 13 shows the characteristics of an interference filter which is actually used as the filter 16. Reference numeral 17 denotes an interference filter which transmits the wavelength of 1 μm or more and reflects that of less than 1 μm. The characteristics of the one used as the filter 17 are shown in Figure 14. The reference numeral 18 denotes an interference filter which transmits the wavelength around 1.2 μm and reflects all other wavelengths. Figure 15 shows the characteristics of a filter used as the filter 18. The reference numeral 19 denotes an interference filter which transmits the wavelength of around 1.3 μm and reflects all the other wavelengths. The characteristics of an interference filter used as the filter 19 is shown in Figure 16. The reference numeral 20 denotes an interference filter which transmits the wavelength near 0.89 μm and reflects all others. The characteristics of a filter which is used as the filter 20 are shown in Figure 17. The reference numeral 21 denotes an interference filter which transmits the wavelength around 0.81 μm and reflects all the others. The characteristics of a filter used as the filter 21 are shown in Figure 18. Respective interference filters of which characteristics are shown in Figures 13 through 18 are constructed by film which is deposited with TiO SiO$_2$.

Referring to Figure 12 the reference numeral 22 denotes a signal light of the wavelength of 1.2 μm, 23 a signal light of the wavelength of 1.3 μm, 24 a signal light of the wavelength of 0.89 μm, 25 a signal light of the wavelength of 0.81 μm, and 26 a monitoring light of the wavelength of 0.76 μm. The reference numeral 27 denotes a lens which makes the light from the optical fiber to be parallel or which condenses the parallel light into the optical fiber. The reference numerals 28 and 28' denote glass blocks which have a refractive index approximate to the refractive index of the optical fiber or the lens and the reference numeral 29 denotes an optical fiber which inputs/outputs light to/from the lens 27.

In Figure 12, the signal light 22 of the wavelength of 1.2 μm passes through the interference filter 18, is reflected by the interference filter 16 and enters the optical transmission line 2. The signal light 25 of the wavelength of 0.81 μm passes through the interference filter 21, is reflected by the interference filters 20 and 17, passes through the interference filter 16, and enters the optical transmission line 2. The signal light of the wavelength of 1.3 μm which has traveled on the optical transmission line 2, on the other hand, is reflected by the interference filters 16 and 18, passes through the interference filter 19 and is received as the signal light 23. The signal light of the wavelength of 0.89 µm which has propagated on the optical transmission line 2 passes through the interference filter 16, is reflected by the interference filter 17, passes through the interference filter 20 and is received as the signal light 24. The monitoring light of the wavelength of 0.76 µm which has propagated on the optical transmission line 2 passes through the interference filter 16, is reflected respectively by the interference filters 17, 20 and 21, is further reflected as the light for monitoring 26 by the mirror 11, and reverses its track to enter the optical transmission line 2 again.

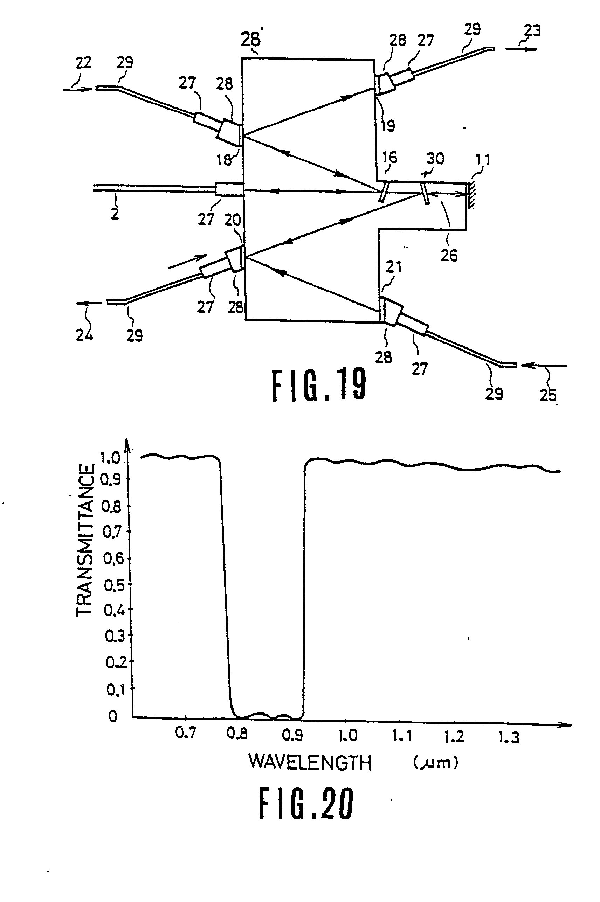

Figure 19 shows another construction embodiment applied to 4-wavelength bidirectional wavelength multiplexing transmission wherein the reference numeral 30 denotes an interference filter which reflects the light of the wavelengths of 0.89 µm and 0.81 µm and transmits all the other lights. The structure is otherwise identical to the one explained referring to Figure 12. The characteristics of the filter 30 are shown in Figure 20. In this embodiment 0.81 µm, 0.89 µm, 1.2 µm and 1.3 µm are selected as the wavelengths for signal transmission and 0.76 µm for monitoring.

The signal light 22 of the wavelength of 1.2 µm passes through the interference filter 18, is reflected by the filter 16, and enters the optical transmission line 2. The signal light 25 of the wavelength of 0.81 µm passes through the interference filter 21, is reflected by the interference filters 20 and 30, passes through the interference filter 17, and enters the optical transmission line 2.

The signal light of the wavelength of 1.3 µm which has transmitted on the line 2, on the other hand, is reflected by the interference filters 16 and 18, passes through the interference filter 19, and is received as the signal light 23. The signal light of the wavelength of 0.89 µm which has traveled on the line 2 passes through the interference filter 16, is reflected by the interference filter 30, passes through the interference filter 20 and is received as the signal light 24. The monitoring light 26 of the wavelength of 0.76 µm which has transmitted on the line 2 passes through the interference filters 16 and 30, is reflected by the mirror 11, and travels the track reversingly to enter the optical transmission line 2.

The construction mentioned referring to Figures 12 and 19 shows a mere example, and other combinations of filters and mirrors or other designs of optical lines may be possible for embodying this invention.

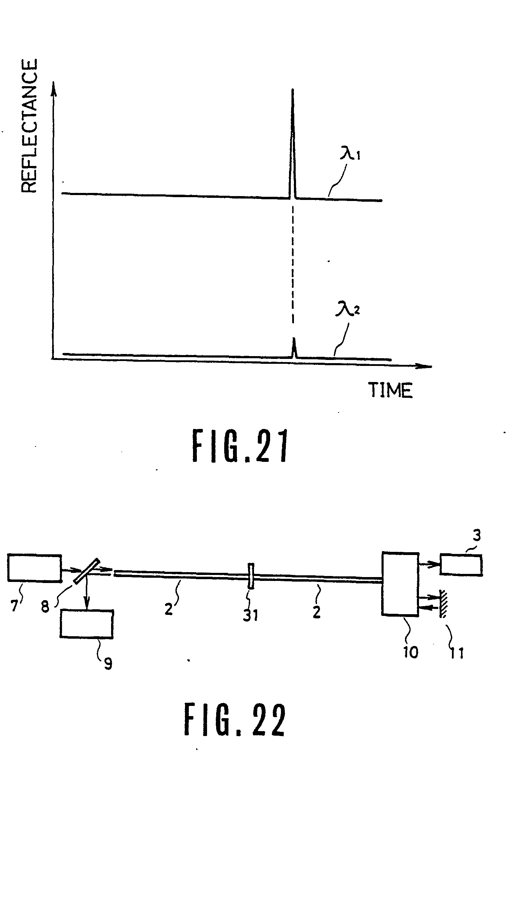

Description will now be given of another embodiment which compares the amount of the reflected light of the wavelength of monitoring with the reflected light of the wavelength of signal transmission. The structure thereof is identical with the one shown in Figure 8. When an optical transmission line is broken, the reflectance at the broken location, in principle, does not depend on the wavelength. The light of the monitoring wavelength which is to be filtered by the filter 10 and reflected by the mirror 11 as shown in Figure 8 is caused to enter the optical transmission line 2 from a near end, the reflected amount thereof is measured, and then the light of a wavelength which is prevented by the filter 10 from reaching the mirror 11, for instance the light for transmission, is caused to enter the line 2 toward the filter 10, and the reflected amount thereof is measured. Then, respective reflectance is obtained from the reflected amounts for both wavelengths. If the reflectance is high in the monitoring wavelength and is low in the signal transmission wavelength when reflected by the mirror 11, it is judged that the reflection by the mirror 11 was observed under the good condition, proving that the optical transmission line 2 is normal up to the far end. The reflectance thereof is shown in Figure 21 wherein the wavelength $\lambda_1$ is for monitoring, and the wavelength $\lambda_2$ for signal transmission. If the reflectance of both wavelengths is similar to each other, this condition should be judged as representing the reflection from a broken point, thereby proving that the optical transmission line 2 is broken.

Fault checking on an optical transmission line can be made easier by making the difference in reflectance of both wavelengths more conspicuous. This can be achieved by treating the filter 10 or the mirror 11 shown in Figure 8 so as to make them non-reflective to the light of the wavelength of signal transmission. This makes the filter 10 or the mirror 11 non-reflective to the light of signal transmission wavelength. More particularly, the output end of the wavelength for signal transmission of the filter may be coated for non-reflection coating, or in case the output is of an optical fiber, the output end of the optical fiber may be coated with non-reflection coating or may be treated to incline the output end against the transmission axis. By this treatment, the output end may be made almost completely non-reflective to the wavelength for signal transmission. The reflectance of the wavelength for signal transmission is compared with the reflectance of the wavelength for monitoring in the above, but it is not limited to the wavelength for signal transmission but may be any other wavelength so long as the reflectance thereof is lower than the reflectance of the monitoring wavelength at the filter 10 and the mirror 11.

The reflectance can be obtained simply by adding the round trip propagation losses (in terms of dB) on the optical transmission line 2 by the wavelength to the amount of reflection (in terms of dBm).

Although the reflected light is measured on time axis in all of the aforementioned embodiments, it is not necessarily measured on time axis but may be measured by obtaining the total amount of reflected light. In case there is no fault existing on the optical transmission line up to the far end, the reflected light returns from the far end at a larger reflectance, while in case there exists a fault thereon, it returns at a smaller reflectance. Therefore, presence/absence of a fault can be detected by measuring the amount of this reflected light.

The above structure is advantageous in that it does not require in the near end the generation and measurement of pulses, and therefore the structure can be simplified; however, it is defective in that when a fault is detected, approximate distances to the faulty point can not be measured.

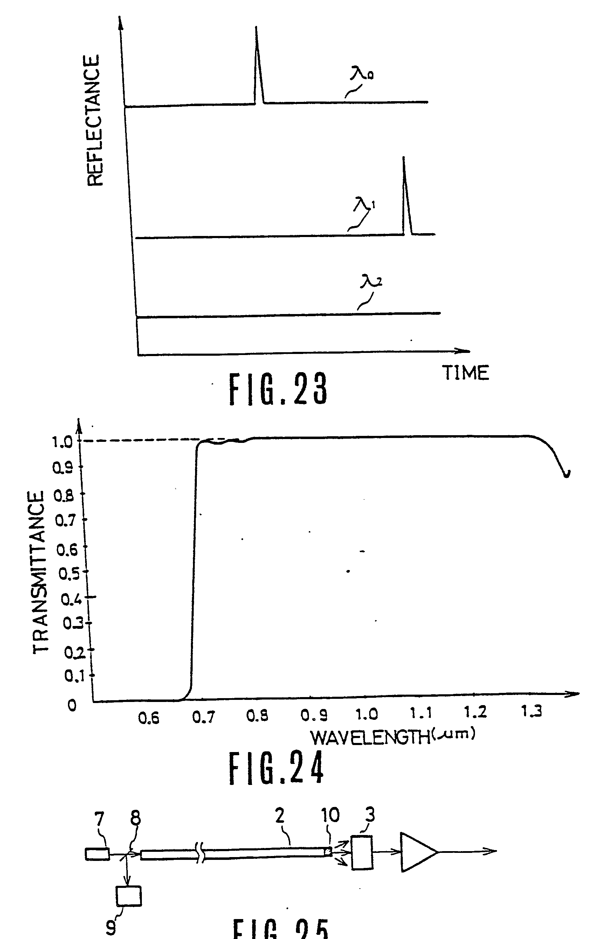

Description will now be given to an embodiment provided with plural far ends. In Figure 22 $\lambda_0$, $\lambda_1$ represent the wavelengths for monitoring, while $\lambda_2$ represents the wavelength for signal transmission. The optical transmission line is provided intermediately with a filter 31 which transmits the light of the wavelength of $\lambda_1$ and the light of the wavelength $\lambda_2$ for signal transmission, and reflects a portion of other lights having the wavelength of $\lambda_0$ and the reflectance at the wavelengths, $\lambda_0$, $\lambda_1$, $\lambda_2$ are sought. The result is shown in Figure 23. This indicates that if the optical transmission line 2 is normal, the reflectance of the wavelength $\lambda_0$ becomes large at the time point corresponding to the position of the filter 31, the reflectance of the wavelength $\lambda_1$ becomes large at the time point corresponding to the position of the filter 10 and the reflectance becomes small for the wavelength $\lambda_2$. If there occurs a break on the optical transmission line between the optical pulse sender 7 and the filter 31, the wavelengths $\lambda_0$, $\lambda_1$, $\lambda_2$ are observed to have almost identical reflectance at the time point corresponding to the broken point. If there exists a break on the line 2 between the filter 31 and the filter 10, on the other hand, reflection with a large reflectance is observed for the wavelength $\lambda_0$ at the time point corresponding to the position of the filter 31 but there is no reflection for other wavelengths. However, at the time point corresponding to the position of the broken point between the filter 31 and the filter 10, reflection at the similar reflectance can be observed for the wavelengths $\lambda_1$ and $\lambda_2$. This enables the line to be distinguished by a smaller section. If a filter is provided on the optical transmission line 2, further fragmentation of the line into more smaller section becomes possible. The characteristics of the interference filter used as the filter 31 are shown in Figure 24. The embodiment shown in Figure 24 is the case where 0.65 μm is selected as the wavelength of $\lambda_0$.

Figure 25 shows still another embodiment of this invention. This embodiment has the structure which directly reflects the wavelength for monitoring directly from the filter by using the one as the filter 10 which transmits the wavelength for signal transmission and reflects the one for monitoring. More particularly, the filter 10 is inserted stationarily on the far end of the optical fiber 2 which is being tested so that the signal light is made to pass through the filter 10 at the normal communication and is guided into the light receiving circuit which is the fundamental optical path. As shown in Figure 25, at the time of monitoring the near end is connected to the optical pulse sender 7, the optical directional coupler 8 and the optical pulse receiver 9. At this time, the light of the monitoring wavelength or the output from the optical pulse sender 7 is made to be transmitted from left to right in the figure through the tested optical fiber 2 to be reflected directly by the filter 10; and the reflected light thereof is transmitted in reverse direction through the tested optical fiber 2 to be separated by the optical directional coupler 8 and to be received and detected by the optical pulse receiver for monitoring 9. If the reflected light is reflected by the filter 10, the light amount is large, while if it is reflected by a fault intermediate of the tested optical fiber, the amount is small.

## Claims

1. A fault location method for monitoring the reflection of light in an optical transmission line characterised in that the presence or absence of faults on an optical transmission line between a far end and a near end is detected by inserting stationarily a filter (10) at said far end of an optical transmission line (2) which is under test, guiding light from said optical transmission line (2) to the filter (10) so as to separate light of a first wavelength to be used for signal transmission from light of a second wavelength to be used for monitoring, guiding the light of the first wavelength to the fundamental optical path, guiding the light of the second wavelength reversely in said optical transmission line (2) by reflecting the same at said far end of the line (2) at a high reflectance, sending light of the second wavelength from said near end toward said far end on the optical transmission line (2), and detecting the amount of the light reflected from said far end of the optical transmission line (2).

2. The fault location method as claimed in Claim 1 which includes sending the light of the first wavelength beside the light of the second wavelength from the near end of the optical transmission line (2) and comparing the amounts of the two types of light after reflection.

3. The fault location method as claimed in Claim 2 wherein the light of the second wavelength and the light of the first wavelength are transmitted time-serially on the optical transmission line (2) under test.

4. The fault location method as claimed in Claim 2 wherein the light of the second wavelength and the light of the first wavelength are simultaneously transmitted to the optical transmission line (2) under test.

5. The fault location method as claimed in Claim 2, 3 or 4 wherein: the optical transmission line (2) which is under test is provided with plural far ends having different distances, filters (10, 31) are respectively inserted stationarily on each of the plural far ends, the light arriving from said optical transmission line (2) is guided to the filters (10, 31) so as to separate the light of the first wavelength from the light of the second wavelength, the light of the first wavelength is guided to the fundamental optical path, and the light of the second wavelength is guided to be reflected at a high reflectance so as to reversely travel on said optical transmission line (2).

6. The fault location method as claimed in Claim 2, 3 or 4 wherein: the optical transmission line (2) which is under test is provided with plural far ends having different distances, filters (10, 31) are respectively inserted stationarily on each of the plural far ends, the light arriving from said optical transmission line (2) is guided to the filters (10, 31) so as to separate the light of the first wavelength from the light of the second wavelength, the light of the first wavelength is guided to the fundamental optical path, and the light of the second wavelength is guided to be reflected at a high reflectance so as to reversely travel on said optical transmission line (2), the light of the second wavelength is light of plural and different wavelengths, and the plural filters (10, 31) at the far ends are structured to separate those plural wavelengths respectively.

7. A fault location device, for monitoring the reflection of light in an optical transmission line, characterised in that it comprises:—

a filter (10), stationarily inserted on a far end of the optical transmission line (2), which separates the light arriving at an optical transmission line (2) into light of a first wavelength to be used for signal transmission and light of a second wavelength to be used for monitoring;

means (3) for guiding the thus separated light of said first wavelength into a fundamental optical path;

means (11) for reflecting at a high reflectance and reversely transmitting on said optical transmission line (2) said light of said second wavelength;

means (7) provided on a near end of said optical transmission line for sending the light of said second wavelength to the optical transmission line (2) being tested; and

means (9) for detecting the amount of the light of said second wavelength which is reflected back to the optical transmission line (2).

8. The fault location device as claimed in Claim 7 wherein the filter (10) is non-reflective in respect of said first wavelength.

**Patentansprüche**

1. Ein Fehlerlokalisierverfahren für die Überwachung der Reflektion von Licht in einer optischen Übertragungsleitung, dadurch gekennzeichnet, daß das Vorhandensein oder Fehlen von Fehlern auf einer optischen Übertragungsleitung zwischen einem fernen Ende und einem nahen Ende erfaßt wird durch stationäres Einfügen eines Filters (10) an dem fernen Ende einer optischen Übertragungsleitung (2), die zu prüfen ist, Leiten von Licht aus der optischen Übertragungsleitung (2) zu dem Filter (10), um so Licht einer ersten Wellenlänge, das für die Signalübertragung benutzt wird, von Licht einer zweiten Wellenlänge, das für die Überwachung benutzt wird, zu trennen, Leiten des Lichts der ersten Wellenlänge zu der fundamentalen optischen Strecke, Leiten des Lichts der zweiten Wellenlänge zurück in die optische Übertragungsleitung (2) durch Reflektion desselben an dem fernen Ende der Leitung (2) mit hoher Reflektanz, Senden von Licht der zweiten Wellenlänge von dem nahen Ende zu dem fernen Ende auf der optischen Übertragungsleitung (2) und Erfassen der von dem fernen Ende der optischen Übertragungsleitung (2) reflektierten Lichtmenge.

2. Das Fehlerlokalisierverfahren nach Anspruch 1, das das Senden von Licht der ersten Wellenlänge neben dem Licht der zweiten Wellenlänge von dem nahen Ende der optischen Übertragungsleitung (2) umfaßt, und Vergleichen der Menge der beiden Typen von Licht nach der Reflektion.

3. Das Fehlerlokalisierverfahren nach Anspruch 2, bei dem das Licht der zweiten Wellenlänge und das Licht der ersten Wellenlänge zeitlich seriell auf der optischen Übertragungsleitung (2), die geprüft wird, übertragen werden.

4. Das Fehlerlokalisierverfahren nach Anspruch 2, bei dem das Licht der zweiten Wellenlänge und das Licht der ersten Wellenlänge gleichzeitig auf der optischen Übertragungsleitung (2), die geprüft wird, übertragen werden.

5. Das Fehlerlokalisierverfahren nach Anspruch 2, 3 oder 4, bei dem die optische Übertragungsleitung (2), die geprüft wird, mit einer Mehrzahl von fernen Enden mit unterschiedlichen Distanzen versehen ist, Filter (10, 31) jeweils stationär an jedem der mehreren fernen Enden eingefügt sind, das von der optischen Übertragungsleitung (2) eintreffende Licht zu den Filtern (10, 31) geführt wird, um so das Licht der ersten Wellenlänge von dem Licht der zweiten Wellenlänge zu trennen, das Licht der ersten Wellenlänge zu der fundamentalen optischen Strecke geführt wird, und das Licht der zweiten Wellenlänge mit hoher Reflektanz reflektiert geleitet wird, um so die optische Übertragungsleitung (2) rückwärts zu durchlaufen.

6. Das Fehlerlokalisierverfahren nach Anspruch 2, 3 oder 4, bei dem die optische Übertragungsleitung (2), die geprüft wird, mit einer Mehrzahl von fernen Enden mit unterschiedlichen Distanzen versehen ist, Filter (10, 31), jeweils stationär an jedem der mehreren fernen Enden eingefügt sind, das von der optischen Übertragungsleitung (2) eintreffende Licht zu den Filtern (10, 31) geführt wird, um so das Licht der ersten Wellenlänge von dem Licht der zweiten Wellenlänge zu trennen, das Licht der ersten Wellenlänge zu der fundamentalen optischen Strecke geführt wird, und das Licht der zweiten Wellenlänge geführt wird, um mit hoher Reflektanz reflektiert zu werden, um so die optische Übertragungsleitung rückwärts zu durchlaufen, das Licht der zweiten Wellenlänge in einer Mehrzahl mit unterschiedlichen Wellenlängen vorliegt, und die Mehrzahl von Filtern (10, 31) an den ferden Enden so aufgebaut sind, daß sie die Mehrzahl von jeweiligen Wellenlängen trennen.

7. Eine Fehlerlokalisieranordnung für die Überwachung der Reflektion von Licht in einer optischen Übertragungsleitung, dadurch gekennzeichnet, daß sie umfaßt:

ein Filter (10), stationär eingefügt an einem fernen Ende der optischen Übertragungsleitung (2), welches das an einer optischen Übertragungsleitung (2) eintreffende Licht in Licht einer ersten Wellenlänge, zu verwenden für die Signalübertragung, und Licht einer zweiten Wellenlänge, zu verwenden für die Überwachung, trennt;

Mittel (3) für das Leiten des so getrennten Lichts der ersten Wellenlänge in eine fundamentale optische Strecke;

Mittel (11) für die Reflektion mit hoher Reflektanz und Rückwärtsübertragung auf der optischen Übertragungsleitung (2) des Lichts der zweiten Wellenlänge;

Mittel (7), vorgesehen an einem nahen Ende der optischen Übertragungsleitung, für das Senden des Lichts der zweiten Wellenlänge zu der optischen Übertragungsleitung (2), die geprüft wird, und

Mittel (9) für das Erfassen der Lichtmenge der zweiten Wellenlänge, die zu der optischen Übertragungsleitung (2) zurückreflektiert wird.

8. Die Fehlerlokalisieranordnung nach Anspruch 7, bei der das Filter (10) bezüglich der ersten Wellenlänge nicht reflektiv ist.

**Revendications**

1. Un procédé de localisation de défaut destiné à surveiller la réflexion de lumière dans une ligne de transmission optique caractérisé en ce que la présence ou l'absence de défaut sur une ligne de transmission optique entre une extrémité lointaine et une extrémité proche est détectée en insérant de façon stationnaire un filtre (10) à ladite extrémité lointaine d'une ligne de transmission optique (2) qui est en cours d'essai, en guidant de la lumière à partir de ladite ligne de transmission optique (2) vers le filtre (10) de façon à séparer une lumière d'une première longueur d'onde, à utiliser pour la transmission de signal, d'une lumière d'une seconde longueur d'onde, à utiliser pour la surveillance, en guidant la lumière de la premier longueur d'onde sur le chemin optique fondamental, en guidant la lumière de la deuxième longueur d'onde en sens inverse dans ladite ligne de transmission optique (2) en réfléchissant celle-ci à ladite extrémité lointaine de la ligne (2) selon un facteur de réflexion élevé, en envoyant de la lumière de ladite deuxième longueur d'onde à partir de ladite extrémité proche vers ladite extrémité lointaine de la ligne de transmission optique (2), et en détectant l'amplitude que la lumière réfléchit à partir de ladite extrémité lointaine de la ligne de transmission optique (2).

2. Le procédé de localisation de défaut selon la revendication 1 qui comprend l'envoi de la lumière de la première longueur d'onde en plus de la lumière de la deuxième longueur d'onde à partir de l'extrémité proche de la ligne de transmission (2) et la comparaison des amplitudes des deux types de lumière après réflexion.

3. Le procédé de localisation de défaut selon la revendication 2 dans lequel la lumière de la deuxième longueur d'onde et la lumière de la première longueur d'onde sont transmises en série temporelle sur la ligne de transmission optique (2) en cours d'essai.

4. Le procédé de localisation de défaut selon la revendication 2 dans lequel la lumière de la deuxième longueur d'onde et la lumière de la première longueur d'onde sont transmises simultanément à la ligne de transmission optique (2) en cours d'essai.

5. Le procédé de localisation de défaut selon la revendication 2, 3 ou 4 dans lequel; la ligne de transmission optique (2) qui est en cours d'essai comporte de multiples extrémités lointaines situées à des distances différentes, les filtres (10, 31) sont respectivement insérés de façon stationnaire sur chacune des multiples extrémités lointaines, la lumière arrivant de ladite ligne de transmission optique (2) est guidée vers les filtres (10, 31) de façon à séparer la lumière de la première longueur d'onde de la lumière de la deuxième longueur d'onde, la lumière de la première longueur d'onde est guidée vers le chemin optique fondamental, et la lumière de la deuxième longueur d'onde est guidée pour être réfléchie selon un facteur de réflexion élevé de façon à se propager en sens inverse sur ladite ligne de transmission optique (2).

6. Le procédé de localisation de défaut selon la revendication 2, 3 ou 4 dans lequel: la ligne de transmission optique (2) qui est en cours d'essai comporte de multiples extrémités lointaines situées à des distances différentes, des filtres (10, 31) sont respectivement insérés de façon stationnaire sur chacune des multiples extrémités lointaines, la lumière arrivant de ladite ligne de transmission optique est guidée vers les filtres (10, 31) de façon à séparer la lumière de la première longueur d'onde de la lumière de la deuxième longueur d'onde, la lumière de la première longueur d'onde est guidée vers le chemin optique fondamental, et la lumière de la deuxième longueur d'onde est guidée pour être réfléchie selon un facteur de réflexion élevé de façon à se propager en sens inverse sur ladite ligne de transmission optique (2), la lumière de la deuxième longueur d'onde est la lumière de longueurs d'onde multiples et différentes, et les multiples filtres (10, 31) aux extrémités lointaines sont d'une structure apte à séparer ces multiples longueurs d'onde respectivement.

7. Un dispositif de localisation de défaut, destiné à surveiller la réflexion de lumière dans une ligne de transmission optique, caractérisé en ce qu'il comprend:

un filtre (10), inséré de façon stationnaire sur une extrémité lointaine de la ligne de transmission optique (2), qui sépare la lumière arrivant à une ligne de transmission optique (2) en une lumière d'une première longueur d'onde, à utiliser pour la transmission de signal, et une lumière d'une deuxième longueur d'onde, à utiliser pour la surveillance;

des moyens (3) pour guider la lumière ainsi séparée de ladite première longueur d'onde dans un chemin optique fondamental;

des moyens (11) pour réfléchir selon un facteur de réflexion élevé et transmettre en sens inverse sur ladite ligne de transmission optique (2) ladite lumière de ladite deuxième longueur d'onde;

des moyens (7) disposés sur une extrémité proche de ladite ligne de transmission optique pour envoyer la lumière de ladite deuxième longueur d'onde à la ligne de transmission optique (2) en cours d'essai; et

des moyens (9) pour détecter l'amplitude de la lumière de ladite deuxième longueur d'onde qui est réfléchie en sens inverse vers la ligne de transmission optique (2).

8. Le dispositif de localisation de défaut selon la revendication 7 dans lequel le filtre (10) est non réfléchissant pour ladite première longueur d'onde.

FIG. 1

FIG. 2

# FIG. 3

# FIG. 4

EP 0 117 868 B1

FIG. 5

FIG.6

FIG.7

FIG.8

FIG.9

FIG.10

FIG.11

FIG.12

FIG.13

FIG.14

FIG.15

FIG.16

FIG.17

FIG.18

# FIG.19

WAVELENGTH (μm)

# FIG.20

FIG.21

FIG. 22

FIG. 23

REFLECTANCE

$\lambda_0$

$\lambda_1$

$\lambda_2$

TIME

FIG. 24

TRANSMITTANCE

1.0
0.9
0.8
0.7
0.6
0.5
0.4
0.3
0.2
0.1
0

0.6   0.7   0.8   0.9   1.0   1.1   1.2   1.3

WAVELENGTH (μm)

FIG. 25

7   8                    2   10   3

9